# EUROPEAN PATENT SPECIFICATION

(11) **EP 0 484 925 B1**
(45) Date of publication and mention of the grant of the patent: **07.09.1994**
(21) Application number: 91118939.7
(22) Date of filing: 06.11.1991
(51) Int. Cl.: F01N 3/28, F01N 1/08

(54) **Catalyzer-containing muffler**
Schalldämpfer mit Katalysator
Silencieux avec catalyseur

(30) Priority: 07.11.1990 JP 302264/90
(43) Date of publication of application: 13.05.1992
(73) Proprietor: EBARA CORPORATION, Ohta-ku, Tokyo (JP)
(72) Inventor: Sase, Toshitsugu, Ohta-ku, Tokyo (JP); Matsuda, Michiaki, Ohta-ku, Tokyo (JP)
(74) Representative: Tiedtke, Harro, Dipl.-Ing.

(56) References cited:
- DE-A- 2 800 687
- US-A- 2 938 593
- US-A- 3 445 196
- US-A- 4 094 644
- US-A- 4 866 932

## Description

The present invention relates to a catalyzer-containing muffler wherein a catalyzer is provided inside the casing of the muffler.

In recent years, as environmental problems have been drawing more public-attention, more stringent regulations for exhausted gases and noise from internal combustion engines have been enacted. In order to comply with these regulations, mufflers and exhaust-gas cleaners have become indispensable for internal combustion engines.

Generally, in the use of an internal combustion engine, provision of both a muffler and an exhaust-gas cleaner, such as a denitration or desulfuration device is indispensable. The muffler for an internal combustion engine usually includes two-stage muffling construction in order to sufficiently reduce noises. The provision of these muffler and the exhaust-gas cleaner, however, conventionally requires a substantial space for their installation. Although efforts have been made to reduce the size of these devices, such an effort has limitations, since the muffler and the exhaust-gas cleaner respectively require a certain volume to accomplish their effect, i.e. noise reduction space for the muffler and exhaust gas treating space for the denitration device. Another problem is that since the two devices have to be prepared and installed separately, the use of these devices are costly. Particularly, in a low-power engine, the cost of the two devices comprises a substantial portion of the total cost, which is a substantial obstacle to the provision of these devices in the low-power engines.

In the preamble of the main claim, it is proceeded from a muffler as is shown in the US-A-3 445 196 . According to this prior art, the inner space of said muffler is divided into a plurality of spaces by a plurality of baffle plates (94, 96, 98). These baffle plates are penetrated by a pipelike catalyst container. The outlet side of the catalyst container is provided with radial apertures (56a) to release the exhaust gas into the divided spaces. This outlet side, moreover, is supported in the outer wall of said muffler in a manner to be closed in order to render an exchange of the catalyst possible. The baffle plates have a plurality of holes for the passage of the exhaust gas therethrough and for the communication between the divided spaces. An inlet pipe provided with a plurality of radial bores extends through the outer wall of the housing of said muffler and also through at least one baffle plate. An outlet pipe which is designed similarly to the inlet pipe is installed on the outlet side of said muffler such that, as does the inlet pipe on the inlet side, it extends through the outer wall and through at least one baffle plate. The exhaust gas therefore is always directed through bores which are provided at the inlet or at the outlet pipes, respectivley, as well as between the baffle plates. Thereby, the exhaust gas is expanded in a throttled manner. This type of muffler basically is a resonant type muffler for attenuating the sound energy in a plurality of spaces divided by the baffle plates.

Therefore, the object of the present invention is to enable the design of a most appropriate muffler which is capable of cleaning or denitriding exhaust gas without impairing a function of noise reduction.

This object is achieved by the features of claim 1, i.e. by providing a catalyzer-containing muffler according to the present invention which comprises: an outer casing defining a closed space therein; an inlet pipe and an outlet pipe provided in said outer casing for introducing and discharging an exhaust gas into and out of said outer casing respectively; at least one partition wall dividing the closed space of said outer casing into two or more spaces; at least one penetrating pipe provided through said each partition wall for communicating said divided spaces with each other; and a catalyzer provided inside at least one of said penetrating pipes.

With the construction and arrangement described above, in operation, the exhaust gas flows through the inlet pipe into one of the spaces formed by the partition walls inside the casing, and flows through the penetrating pipe into another space, and then continues to flow until it finally flows out through the outlet pipe. As a result of the wide space-portions and the narrow pipe-portions of the gas passage, the exhaust-gas flow experiences cycles of rapid expansion and rapid reduction, thus the noise level of the exhaust gas is reduced. The cleaning of the exhaust gas, such as denitration or desulfuration, is performed by the catalyzer provided inside the penetrating pipe or pipes.

The above and other objects, features and advantages of the present invention will become more apparent from the following description when taken in conjunction with the accompanying drawing in which a preferred embodiment of the present invention is shown by way of illustrative examples.

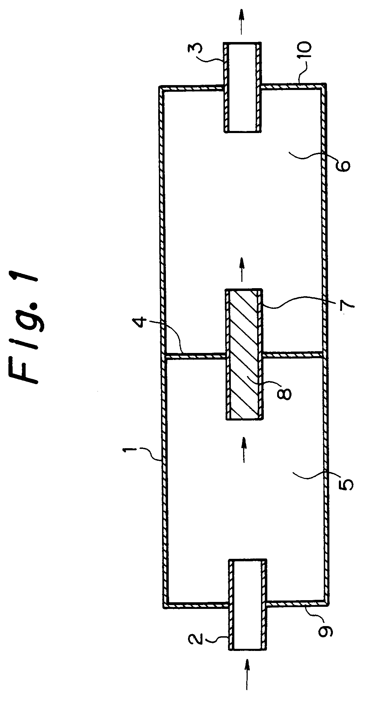

Fig. 1 is a schematic sectional view of a catalyzer-containing muffler according to one embodiment of the present invention.

A preferred embodiment of the present invention will be described with reference to the drawing hereinafter.

Fig. 1 is a schematic sectional view of a catalyzer-containing muffler of the present invention.

A cylindrical outer casing 1 has its two ends sealed by blind plates 9, 10 to define a closed space therein. The blind plates 9, 10 are penetrated by an inlet pipe and outlet pipes 2, 3 respectively, with one end of each of the pipes protruding inside the casing 1 and the other end being outside. The inside of the casing 1 is divided by a partition wall 4 into spaces 5 and 6. The partition wall 4 is penetrated by a penetrating pipe 7, with the ends thereof protruding into the spaces 5, 6. The penetrating pipe 7 contains a catalyzer 8 which removes NOx or SOx from the exhausted gas passing therethrough. As the catalyzer, for example, deep root neo-honeycomb catalysts or metal oxide catalysts may be used for removing NOx or SOx.

In a catalyzer-containing muffler as described above, the exhaust gas flows in the direction indicated by the arrows through the inlet pipe 2 into the space 5 and flows through the penetrating pipe 7 into the spacing 6, and then flows out of the casing 1 through the outlet pipe 3.

When the exhaust gas flows into and out of the casing 1 through the inlet pipe 2 and outlet pipe 3 respectively, the exhaust gas is rapidly expanded and reduced respectively, thus noise level of the exhaust gas is substantially reduced.

The penetrating pipe 7 has two basic functions. One is to let the exhaust-gas flow from the space 5 to the space 6. The other is to rapidly reduce and then rapidly expand the passage for the exhaust gas flow, thus reducing the exhaust gas noise. The most efficient noise reduction will be achieved by selecting a penetrating pipe 7 having an appropriate width and length.

The catalyzer 8 provided in the penetrating pipe 7 cleans the exhausted gas passing therethrough by removing toxic substances such as NOx or SOx, by promoting the chemical reactions of those substances.

Although, in the above embodiment, the inside of the casing 1 is divided by one partition wall 4 into two spaces 5 and 6, the inside thereof may be divided by two or more partition walls into three or more spaces, with each of the partition walls 4 being provided with a penetrating pipe 7. In such a case, the catalyzer 8 may be furnished into either all or some of the penetrating pipes 7. Also, one partition wall may carry two or more penetrating pipes 7, and not necessarily only one as in this embodiment.

Also, the outer casing 1 is not necessarily to be cylindrical, but may be any suitable shape, such as rectangular, elliptic column or the like.

The inlet and outlet pipes 2, 3 do not necessarily protrude into the spaces 5, 6 respectively. The lengths of the protruding portions may be adjusted to attain the best noise reduction.

Also, the inlet and outlet pipes 2, 3 are not necessarily located in the blind plates 9, 10 at the ends of the casing 1, but may be put in the side wall of the casing 1.

Further, the catalyzer furnished in the penetrating pipe 7 is not limited to the ones for removing NOx or SOx from the exhaust gas, but may be ones for removing other toxic substances from the exhaust gas.

As described above, a catalyzer-containing muffler according to the present invention is able to perform both noise reduction and cleaning of exhausted gas, such as removal of NOx or SOx. Thus, the required installation space is greatly reduced since the exhaust-gas cleaner, which is conventionally separated from the muffler, is placed inside the muffler in the present invention.

Also, the cost for providing the exhaust-gas treatment device can be greatly reduced since the catalyzer for treating the exhaust gas is furnished in the muffler.

A catalyzer-containing muffler for treating an exhaust gas from an engine is disclosed. The muffler comprises an outer casing defining a closed space therein and having an inlet pipe and an outlet pipe for introducing and discharging the exhaust-gas into and out of the outer casing, respectively. At least one partition wall is provided so as to divide the closed space of the outer casing into two or more spaces. At least one penetration pipe is provided through the each partition walls for communicating the divided spaces with each other, and a catalyzer is provided inside at least one of the penetrating pipes. Exhaust-gas noise is thereby reduced and at the same time toxic substances such as NOx or SOx are removed by the muffler by means of a single construction.

## Claims

1. A catalyzer-containing muffler comprising:
a catalyzer (1) defining a closed space therein;
an inlet pipe (2) and an outlet pipe (3) provided in said outer casing (1) for introducing and discharging an exhaust-gas from an engine into and out of said outer casing, respectively;
at least one partition wall (4) dividing said closed space of said outer casing (1) into two or more spaces (5, 6);
at least one penetration pipe (7) provided through each of said partition walls (4) for communicating said divided spaces (5, 6) with each other;
**characterized in that,**
each of said penetration pipes (7) is fully positioned within said muffler so that both ends of said pipes are open to said spaces (5, 6) for communication therebetween,
each of said penetration pipes (7) has an inlet opening and an outlet opening at opposite ends thereof and a closed circumferential wall between both ends thereof, the width and length of each of said penetration pipes (7) being selected so that said exhaust-gas passing through said penetration pipe (7) is rapidly reduced and expanded to thereby reduce exhaust-gas noise, and
a catalyzer (8) is provided inside at least one of said penetration pipes (7).

2. The catalyzer-containing muffler claimed in Claim 1, wherein said closed space of said outer casing (1) is divided into two spaces (5, 6) by said single partition wall (4).

3. The catalyzer-containing muffler claimed in Claim 1, wherein said closed space of said outer casing (1) is divided into three spaces by said two partition walls (4).

4. The catalyzer-containing muffler claimed in Claim 1, wherein said each partition wall (4) includes a single said penetration pipe (7).

5. The catalyzer-containing muffler claimed in Claim 1, wherein said each partition wall (4) includes a plurality of said penetration pipes (7).

6. The catalyzer-containing muffler claimed in any one of claims 1 - 5, wherein said outer casing (1) has a cylindrical, rectangular or elliptic cylindrical shape.

7. The catalyzer-containing muffler claimed in Claim 6, wherein said outer casing (1) includes blind plates (9, 10) at the opposite ends of said outer casing (1), and said inlet pipe (2) and outlet pipe (3) are provided in said blind plates (9, 10).

8. The catalyzer-containing muffler claimed in any one of Claims 1 - 5, wherein said inlet pipe (2) and outlet pipe (3) are provided in the side wall of said outer casing (1).

9. The catalyzer-containing muffler claimed in any one of Claims 1 - 5, wherein said inlet pipe (2) and outlet pipe (3) protrude into said divided spaces (5, 6), respectively.

10. The catalyzer-containing muffler claimed in any one of Claims 1 - 5, wherein said catalyzer comprises a material for denitration and or desulfuration of said exhaust gas.

## Patentansprüche

1. Schalldämpfer mit Katalysator, mit
einem Katalysator (1), in dem ein geschlossener Raum ausgebildet ist,
einem Einlaßrohr (2) und einem Auslaßrohr (3), die in dem äußeren Gehäuse (1) zum Einleiten und Abgeben eines Abgases von einem Motor in das äußere Gehäuse bzw. aus dem äußeren Gehäuse geschaffen sind,
mindestens einer Trennwand (4), die den geschlossenen Raum des äußeren Gehäuses (1) in zwei oder mehr Räume (5, 6) teilt,
mindestens einem durch jede der Trennwände (4) geschaffenen Durchtrittsrohr (7), um die abgeteilten Räume (5, 6) miteinander zu verbinden,
**dadurch gekennzeichnet, daß**
jedes der Durchtrittsrohre (7) vollständig innerhalb des Schalldämpfers angeordnet ist, so daß beide Endabschnitte der Rohre zu den Räumen (5, 6) offen sind, um eine Verbindung zwischen ihnen zu schaffen,
jedes der Durchtrittsrohre (7) an seinen gegenüberliegenden Endabschnitten eine Einlaßöffnung und eine Auslaßöffnung und eine geschlossene Umfangswand zwischen seinen beiden Endabschnitten hat, wobei die Breite und die Länge von jedem der Durchtrittsrohre (7) derart gewählt ist, daß ein durch das Durchtrittsrohr (7) strömendes Abgas stark verlangsamt und ausgedehnt wird, um dadurch das Abgasgeräusch zu reduzieren, und
innerhalb von mindestens einem der Durchtrittsrohre (7) ein Katalysator (8) geschaffen ist.

2. Schalldämpfer mit Katalysator gemäß Anspruch 1, wobei der geschlossene Raum des äußeren Gehäuses (1) mittels der einzelnen Trennwand (4) in zwei Räume (5, 6) geteilt ist.

3. Schalldämpfer mit Katalysator gemäß Anspruch 1, wobei der geschlossene Raum des äußeren Gehäuses (1) mittels den zwei Trennwänden (4) in drei Räume geteilt ist.

4. Schalldämpfer mit Katalysator gemäß Anspruch 1, wobei jede Trennwand (4) ein einzelnes Durchtrittsrohr (7) aufweist.

5. Schalldämpfer mit Katalysator gemäß Anspruch 1, wobei jede Trennwand (4) eine Vielzahl der Durchtrittsrohre (7) aufweist.

6. Schalldämpfer mit Katalysator gemäß einem der Ansprüche 1 - 5, wobei das äußere Gehäuse (1) eine zylindrische, rechtwinklige oder elliptische zylindrische Form hat.

7. Schalldämpfer mit Katalysator gemäß Anspruch 6, wobei das äußere Gehäuse (1) an den gegenüberliegenden Endabschnitten des äußeren Gehäuses (1) Blindplatten (9, 10) aufweist, und das Einlaßrohr (2) und das Auslaßrohr (3) in den Blindplatten (9, 10) angebracht sind.

8. Schalldämpfer mit Katalysator gemäß einem der Ansprüche 1 - 5, wobei das Einlaßrohr (2) und das Auslaßrohr (3) in der Seitenwand des äußeren Gehäuses (1) angebracht sind.

9. Schalldämpfer mit Katalysator gemäß einem der Ansprüche 1 - 5, wobei das Einlaßrohr (2) bzw. das Auslaßrohr (3) in die abgeteilten Räume (5, 6) vorragen.

10. Schalldämpfer mit Katalysator, gemäß einem der Ansprüche 1 - 5, wobei der Katalysator ein Material zur Denitrierung und oder Entschwefelung des Abgases aufweist.

## Revendications

1. Silencieux catalytique comprenant :
un catalyseur (1) définissant intérieurement un espace fermé,
un tube d'entrée (2) et un tube de sortie (3) prévus dans ledit boîtier externe (1) pour introduire et décharger les gaz d'échappement d'un moteur dans ledit boîtier externe et hors de celui-ci, respectivement,
au moins une cloison (4) divisant ledit espace fermé dudit boîtier externe (1) en deux ou plusieurs espaces (5, 6),
au moins un tube de pénétration (7) prévu à travers chacune desdites cloisons (4) pour faire communiquer lesdits espaces divisés (5, 6) l'un avec l'autre,
caractérisé en ce que :
chacun desdits tubes de pénétration (7) est complètement disposé à l'intérieur du silencieux de telle manière que les deux extrémités desdits tubes soient ouvertes sur lesdits espaces (5, 6) pour les faire communiquer entre eux,
chacun desdits tubes de pénétration (7) a une ouverture d'entrée et une ouverture de sortie à ses extrémités opposées et une paroi périphérique fermée entre lesdites deux extrémités, la largeur et la longueur de chacun desdits tubes de pénétration (7) étant choisies de telle sorte que lesdits gaz d'échappement passant à travers ledit tube de pénétration (7) soient rapidement réduits et dilatés pour ainsi réduire le bruit dû aux gaz d'échappement, et
un catalyseur (8) qui est installé à l'intérieur d'au moins l'un desdits tubes de pénétration (7).

2. Silencieux catalytique selon la revendication 1, dans lequel ledit espace fermé dudit boîtier externe (1) est divisé en deux espaces (5, 6) par ladite cloison unique (4).

3. Silencieux catalytique selon la revendication 1, dans lequel ledit espace fermé dudit boîtier externe (1) est divisé en trois espaces par deux cloisons (4) du type précité.

4. Silencieux catalytique selon la revendication 1, dans lequel chaque dite cloison (4) comprend un seul tube de pénétration (7) du type précité.

5. Silencieux catalytique selon la revendication 1, dans lequel chaque dite cloison (4) comprend une série desdits tubes de pénétration (7).

6. Silencieux catalytique selon l'une quelconque des revendications 1 à 5, dans lequel ledit boîtier externe (1) a une forme cylindrique, rectangulaire ou cylindrique elliptique.

7. Silencieux catalytique selon la revendication 6, dans lequel ledit boîtier externe (1) comprend des plaques borgnes (9, 10) aux extrémités opposées dudit boîtier externe (1), et ledit tube d'entrée (2) et ledit tube de sortie sont prévus dans lesdites plaques bornes (9, 10).

8. Silencieux catalytique selon l'une quelconque des revendications 1 à 5, dans lequel ledit tube d'entrée (2) et ledit tube de sortie (3) sont prévus dans la paroi latérale dudit boîtier externe (1).

9. Silencieux catalytique selon l'une quelconque des revendications 1 à 5, dans lequel ledit tube d'entrée (2) et ledit tube de sortie (3) font saillie dans lesdits espaces divisés (5, 6), respectivement.

10. Silencieux catalytique selon l'une quelconque des revendications 1 à 5, dans lequel ledit catalyseur comprend une matière permettant de dénitrurer ou de désulfurer lesdits gaz d'échappement.
